# EUROPÄISCHE PATENTSCHRIFT

(11) **EP 0 875 689 B1**
(45) Veröffentlichungstag und Bekanntmachung des Hinweises auf die Patenterteilung: **26.05.2004**
(21) Anmeldenummer: 98104881.2
(22) Anmeldetag: 18.03.1998
(51) Int. Cl.: F16D 23/06

(54) **Synchronisiervorrichtung**
Synchro
Dispositif de synchronisation

(30) Priorität: 30.04.1997 DE 19718317
(43) Veröffentlichungstag der Anmeldung: 04.11.1998
(73) Patentinhaber: INA-Schaeffler KG, 91074 Herzogenaurach (DE)
(72) Erfinder: Schwuger, Josef, 91315 Höchstadt / Aisch (DE); Sinner, Rudolf, 91088 Bubenreuth (DE); Waldert, Hartwig, 91325 Aisch (DE)

(56) Entgegenhaltungen:
- EP-A- 0 508 976
- EP-A- 0 717 212
- FR-A- 1 385 860
- US-A- 3 678 557

## Beschreibung

### Gebiet der Erfindung

Die Erfindung betrifft ein Schaltrad für eine Synchronisiervorrichtung von in Kraftfahrzeugen eingesetzten Zahnräderwechselgetrieben, dem ein Kupplungskörper sowie ein Reibring zugeordnet ist, wobei der Kupplungskörper während eines Schaltvorgangs über eine Dachverzahnung formschlüssig mit einer Schiebemuffe verbunden wird und eine konische Reibfläche des Reibrings (23, 33) während einer Synchronisierung mit einem Synchronring zusammenwirkt.

### Hintergrund der Erfindung

Synchronisiervorrichtungen der zuvor genannten Bauart finden Anwendung in Zahnräderwechselgetrieben, die den Gangwechsel eines vorzugsweise manuell schaltbaren Getriebes vereinfachen. Aus der EP-A 0 508 976 ist eine gattungsgemäße Synchronisiervorrichtung bekannt. Dieses Dokument zeigt eine Synchronisiervorrichtung, deren Reibring zur Schaffung einer drehfesten Verbindung axial vorstehende Zapfen aufweist, die in Aussparungen des Kupplungskörpers spielbehaftet eingreifen. Die Aussparungen sind dabei zu einem axial vorstehenden Ansatz des Schaltrades bzw. zu einem Innendurchmesser des scheibenartig gestalteten Kupplungskörpers radial nach außen versetzt. Ein derartiger Aufbau erfordert eine größere maßliche Toleranz zwischen dem axialen Zapfen des Reibrings und den Ausnehmungen in dem Kupplungskörper, aufgrund einer Toleranzaddierung, die sich durch ein erstes, auf den Durchmesser des Schaltradansatzes bezogenes Toleranzfeld sowie eine für die Ausnehmungen im Kupplungskörper bestimmte Durchmessertoleranz einstellt. Folglich ist zwangsläufig ein größeres Einbauspiel zwischen dem axial vorstehenden Zapfen in Verbindung mit den zugehörigen Ausnehmungen in dem Kupplungskörper erforderlich. Eine derartige Konstruktion erschwert eine unlösbare Verbindung zwischen dem Reibring und dem Kupplungskörper.

Das Dokument US-A 3,678,557 zeigt Synchronisiervorrichtungen, die jeweils zwei Bauteile umfassen. Das Schaltrad ist dabei beispielsweise so ausgebildet, dass dieses sowohl den Kupplungskörper als auch den Reibring bildet und dem als weiteres Bauteil ein Kupplungskörper zugeordnet ist. Alternativ ist diesem Dokument ein Schaltrad zu entnehmen, welches mit dem Reibring einstückig verbunden ist und dem ein separater Reibring zugeordnet ist.

Als weiterer Stand der Technik zeigt das EP-A 0 717 212 eine Synchronisiervorrichtung mit einem spielbehaftet, an dem Kupplungskörper lagefixierten Reibring. Die Anordnung des Reibrings in Verbindung mit anderen Bauteilen der Synchronisiereinrichtung bildet keine Baueinheit, bei der die Einzelteile, wie Schaltrad, Kupplungskörper und Reibring unlösbar miteinander verbunden sind.

### Aufgabe der Erfindung

Durch die Erfindung soll gegenüber dem Stand der Technik ein Schaltrad geschaffen werden, dessen Aufbau eine Vereinfachung einzelner Elemente sichergestellt sowie die Bearbeitungs- und Härtekosten reduziert.

### Zusammenfassung der Erfindung

Die zuvor definierte Aufgabenstellung wird erfindungsgemäß durch die im Kennzeichnungsteil der Ansprüche 1 und 6 genannten Merkmale gelöst.

Erfindungsgemäß sind dem Schaltrad bzw. Losrad mehrere, jeweils einzeln vorgefertigte Bauteile zugeordnet, die zur Schaffung einer Einheit drehfixiert miteinander verbunden sind. Diese Einheit umfasst neben dem Schaltrad einen Kupplungskörper und einen Reibring. Dabei sind das Schaltrad und der Kupplungskörper unlösbar miteinander verbunden. Der Reibring ist dabei frei ausrichtbar drehfixiert an der Einheit angekoppelt, zur Sicherstellung einer unlösbaren Verbindung. Zwischen dem Schaltrad und dem Kupplungskörper ist vorzugsweise eine Schweißung oder Klebung einsetzbar. Die erfindungsgemäße Neugestaltung des Schaltrades ermöglicht eine bedarfsgerechte, individuelle, den jeweiligen Beanspruchungen der einzelnen Bauteile angepasste Bearbeitung bzw. Wärmebehandlung, wodurch eine Beeinflussung der benachbarten Bereiche der Synchronisiereinheit ausgeschlossen ist. Die Verzahnungen des Kupplungskörpers sowie des Schaltrades können danach beispielsweise bedarfsgerecht, d. h. den jeweiligen Anforderungen entsprechend gehärtet werden, ohne Beeinflussung anderer Einzelteile der Synchronisiereinheit. Der erfindungsgemäße Aufbau der Baueinheit ermöglicht darüber hinaus eine Vereinfachung, d. h. eine fertigungsoptimierte Konstruktion der einzelnen Bauteile, insbesondere des Schaltrades, was ebenfalls zu einer Kostenreduzierung beiträgt.

Vorteilhafte Ausgestaltungen der Erfindung sind Gegenstand der abhängigen Ansprüche 2 bis 5 und 7, 8 die nachfolgend erläutert werden.

Gemäß einer bevorzugten Ausgestaltung der Erfindung können zur Herstellung der Einzelteile der erfindungsgemäßen Baueinheit unterschiedliche Herstellverfahren eingesetzt werden. Für das Schaltrad bietet es sich an, dieses vorzugsweise als Gussteil auszubilden. Alternativ schließt die Erfindung ebenfalls ein als Sinterteil gestaltetes Schaltrad ein. Der scheibenartig gestaltete Kupplungskörper ist dagegen erfindungsgemäß als ein Feinstanzteil ausgelegt. Für Bauteile dieser Bauart stellt ein Feinstanzen ein kostenoptimiertes Herstellverfahren dar, mit dem gleichzeitig das Bauteil mit einer Genauigkeit herstellbar ist, das keine Nacharbeit erfordert. Für die Herstellung des hülsenartig gestalteten Reibrings eignet sich vorzugsweise ein spanloses Tiefziehverfahren. Dieses Verfahren ermöglicht die Herstellung eines gewichtsoptimierten Reibrings, verbunden mit einer ausreichenden Formstabilität des Reibrings bei gleichzeitiger Erfüllung der Festigkeitsanforderungen.

Die Erfindung schließt weiterhin ein, dass die einzelnen Teile der Baueinheit aus unterschiedlichen Materialien bzw. Werkstoffen hergestellt sind. Für das Schaltrad eignet sich dazu vorzugsweise ein Feinguss GS 45, für den Kupplungskörper C 15; CK 15 und für den Reibring 100 Cr6; 16Mn Cr5; C 80 M oder auch eine Beschichtung dieses Werkstoffs.

Eine konstruktive Ausgestaltung der Erfindung sieht vor, das Schaltrad einseitig mit einem axial vorstehenden Ansatz vorzusehen, an dem sich eine Schulter in radialer Richtung erstreckt. Der Ansatz und die Schulter bilden gemeinsam eine Zentrierung bzw. einen Axialanschlag für den Kupplungskörper und/oder für das Übertragungselement. Dabei erfährt das auf dem Ansatz zentrierte Bauteil eine Axialbegrenzung an einer Schulter des Schaftrades. Bei Verwendung eines Schaltrades als Feingussteil in einer hohen Fertigungsgüte entfällt eine mechanische Nacharbeitung des axial vorstehenden Ansatzes, was zu einer weiteren Kostenreduzierung führt. Der am Schaltrad axial vorstehende Ansatz kann dabei ebenfalls zur Aufnahme dieses einteiligen Bauteils genutzt werden, bei dem der Reibring und der Kupplungskörper einteilig ausgeführt sind.

Die Erfindung schließt ebenfalls eine Baueinheit ein, deren scheibenartiger Kupplungskörper über einen Innendurchmesser auf den Ansatz des Schaltrades zentriert ist und der konisch gestaltete Reibring formschlüssig mit dem Kupplungskörper verbunden ist. Dazu weist der Reibring auf der Seite mit dem größten Durchmesserbereich axial vorstehende Zapfen auf, die formschlüssig in entsprechende Ausnehmungen des Kupplungskörpers eingreifen. Zur Schaffung einer drehfixierten Verbindung bietet es sich an, die Zapfen im Bereich der Ausnehmungen am Kupplungskörper zu verstemmen, wobei dem Reibring ein gewisser Freiheitsgrad zur toleranzbedingten Ausrichtung mit den Bauteilen verbleibt, die mit dem Reibring in einer Wirkverbindung stehen.

Eine weitere Ausgestaltung der Erfindung gemäß Anspruch 6 bezieht sich auf eine Synchronisiervorrichtung, bei der die Bauteile, das Schaltrad, der Kupplungskörper und der Reibring als vorfertigbare Einzelteile gestaltet sind, die zur Schaffung einer Baueinheit drehfixiert, unlösbar miteinander verbunden sind, und denen zumindest ein Synchronring als ein Losteil zugeordnet ist.

Zur Realisierung einer dauerhaften Sicherung der einzelnen Bauteile der Baueinheit sind diese formschlüssig und unlösbar miteinander verbunden. Neben einer Schweißung, Lötung ist ebenfalls eine Klebung einsetzbar. Weiterhin können einzelne Bauteile durch eine Presspassung dauerhaft gesichert werden.

Gemäß der Erfindung ist vorgesehen, die Baueinheit mit einen Synchronring zu komplettieren.

Damit ist eine Einfachsynchronisierung realisierbar, bei der ein Synchronring auf dem Reibring geführt ist bzw. der Reibring den Synchronring umschließt. Die mit dem Reibring ergänzte Baueinheit stellt eine vorkomplettierte Einheit dar, die beispielsweise alle Bauteile eines Herstellers umfasst, die einem Fahrzeughersteller als Zulieferteil geliefert werden. Der Aufbau der Baueinheit ermöglicht dabei einen Austausch von einer Einfach- gegen eine Mehrfach-Synchronisation. Damit ermöglicht die Erfindung die Verwendung einer Basis-Baueinheit, die abhängig von dem jeweiligen Synchronleistungsbedarf mit einer unterschiedlichen Zahl von Synchronringen bestückt werden kann ohne konstruktive Änderungen.

Zur Darstellung einer Zweifach-Synchronisation können der Baueinheit zwei Synchronringe zugeordnet werden, die beiderseits des Reibrings angeordnet sind.

Die Erfindung schließt weiterhin eine Baueinheit ein, die als eine Dreifach-Synchronisation ausgelegt ist. Dazu ist das Schaltrad einstückig mit einem axial vorspringenden Innenkonus versehen, der radial beabstandet zum Reibring angeordnet ist. In den vom Reibring und dem Innenkonus radial begrenzten Einbauraum ist ein erster Synchronring eingesetzt, der an den Reibflächen des Innenkonus und des Reibrings geführt ist. Die Außenseite des Reibrings bildet eine dritte Reibfläche, an der ein zweiter Synchronring geführt ist. Alternativ zu einem einstückig mit dem Schaltrad verbundenen Innenkonus kann erfindungsgemäß auch ein formschlüssig im Schaltrad eingesetzter Innenkonus vorgesehen werden. Dazu bietet sich insbesondere ein Innenkonus an, der mit partiell axial vorstehenden Zapfen versehen ist, die in entsprechende Ausnehmungen des Schaltrads eingreifen.

Die Erfindung schließt weiterhin ein Schaltrad ein, dem als ein separates Bauteil ein zur Führung des Synchronrings dienender Innenkonus zugeordnet ist. Der Innenkonus ist dabei mit partiell angeordneten, axial vorstehenden Zapfen versehen, die formschlüssig in Ausnehmungen des Schaltrades eingreifen.

Die Erfindung ist in Ausführungsbeispielen dargestellt, die nachfolgend näher erläutert werden.

### Kurze Beschreibung der Zeichnungen

Es zeigen:
- Figur 1: ein erfindungsgemäße Baueinheit, deren drei Einzelteile beabstandet zueinander dargestellt sind;
- Figur 2: eine komplettierte Baueinheit, bestehend aus den drei in Figur 2 abgebildeten Einzelteilen;
- Figur 3: den Aufbau einer Synchronisiervorrichtung, die Schalträder bisheriger Bauart aufweist;
- Figur 4: eine weitere Ausbildung einer erfindungsgemäßen Baueinheit, deren Einzelteile beabstandet dargestellt sind;
- Figur 5: eine aus den Einzelteilen gemäß Figur 4 bestehende Baueinheit in einem Längsschnitt;
- Figur 6: eine aus zwei Einzelteilen bestehende Baueinheit;
- Figur 7: eine Baueinheit, die mit einem auf dem Reibring geführten Synchronring versehen ist, zur Darstellung einer Einfachsynchronisation;
- Figur 8: die Kombination eines erfindungsgemäßes Schaltrades mit beidseitig des Reibrings geführten Synchronringen;
- Figur 9: eine Dreifachsynchronisation, bei der das Schaltrad einstückig mit einem axial vorstehenden Innenkonus versehen ist, auf dem ein erster Synchronring geführt ist und ein zweiter Synchronring auf dem Reibring angeordnet ist ;
- Figur 10: eine der Figur 9 weitestgehend entsprechende Dreifach-Synchronisation, bei der im Unterschied zu Figur 9 der Innenkonus steckbar im Schaltrad eingefügt ist.

### Ausführliche Beschreibung der Zeichnungen

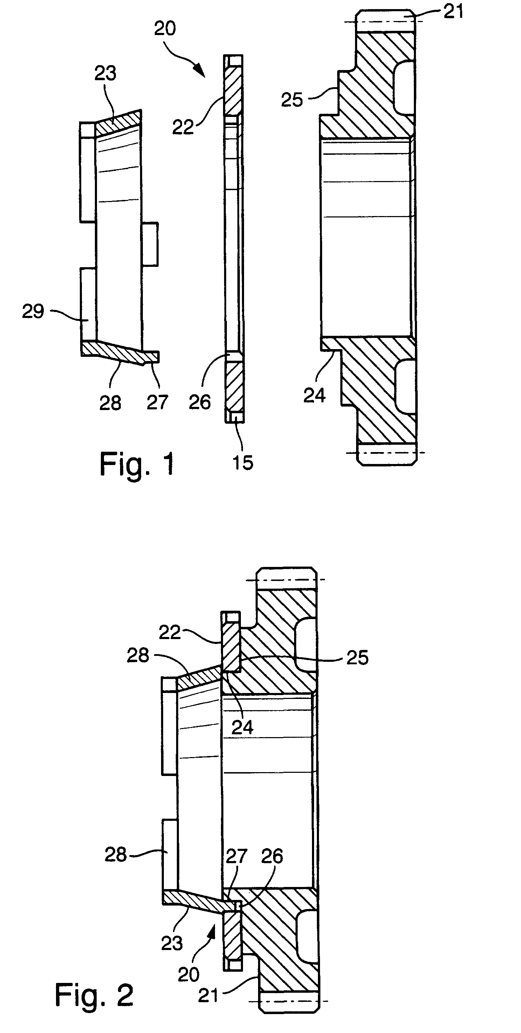

Ein Ausführungsbeispiel einer erfindungsgemäßen Baueinheit 20 ist der Figur 1 zu entnehmen, in der alle Einzelteile beabstandet dargestellt sind. Die Baueinheit 20 umfaßt das Schaltrad 21, den Kupplungskörper 22 sowie den Reibring 23. Dieser mehrteilige Aufbau der Baueinheit 20 ermöglicht eine Werkstoffauswahl, die den jeweiligen Bedürfnissen bzw. Anforderungen der einzelnen Bauteile angepaßt ist. Gleichzeitig sind aufgrund der unterschiedlichen geometrischen Ausgestaltungen der einzelnen Bauteile voneinander abweichende Verfahren zur Herstellung dieser Einzelteile einsetzbar. In Figur 2 ist die komplettierte Baueinheit 20 abgebildet, bestehend aus dem Schaltrad 21, dem Kupplungskörper 22 und dem Reibring 23, der eine konische Reibfläche 28 aufweist. Zur formschlüssigen Verbindung dieser Bauteile ist das Schaltrad 21 mit einem axial vorstehenden Ansatz 24 versehen sowie mit einer Schulter 25, auf der der Kupplungskörper 22 zentriert ist bzw. an der dieser einen Axialanschlag erfährt. Im Bereich eines Innendurchmessers des Kupplungskörpers 22 ist dieser mit mehreren umfangsverteilt angeordneten Aussparungen 26 versehen, in die axial vorstehende Zapfen 27 des Reibrings 23 eingefügt sind, wobei die Zapfen 27 gleichzeitig auf dem Ansatz 24 des Schaltrades 21 zentriert sind. Zur Sicherstellung einer unlösbaren Verbindung aller Einzelteile der Baueinheit 20 sind diese vorzugsweise im Bereich des Ansatzes 24 verschweißt. Der Reibring 23 ist weiterhin mit einer Verdrehsicherung 29 versehen, die an der vom Zapfen 27 abgewandten Stirnseite in axialer Richtung verlaufend angeordnet sind.

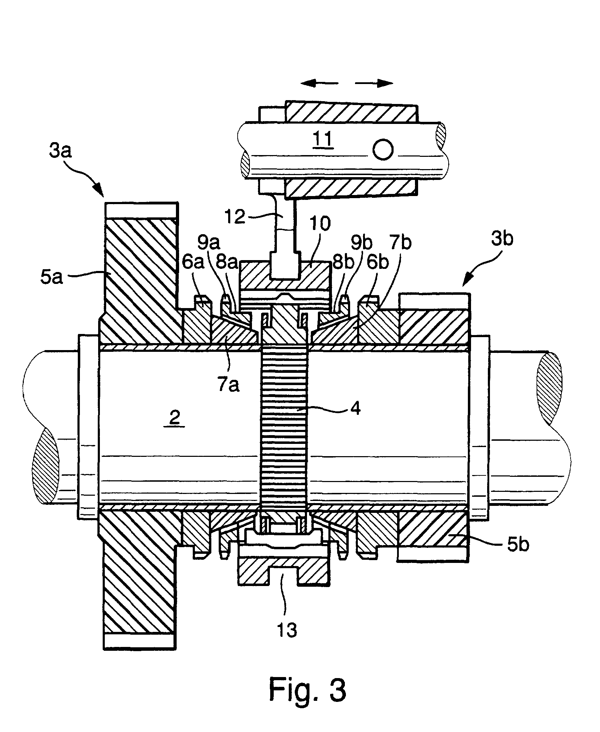

Aus der Figur 3 ist der Aufbau einer Synchronisiervorrichtung 1 zu entnehmen, die in einem Längsschnitt abgebildet ist. Der Aufbau umfaßt zwei Baueinheiten 3a, 3b bisheriger einteiliger Bauart, die auf einer Getriebewelle 2 beabstandet durch einen Muffenträger 4 drehbar angeordnet sind. Jede Baueinheit 3a, 3b ist versehen mit einem eine Außenverzahnung aufweisenden Schaltrad 5a, 5b. In Richtung des Muffenträgers 4 zeigend ist dem Schaltrad 5a, 5b jeweils ein Kupplungskörper 6a, 6b vorangestellt, an dem sich ein Reibring 7a, 7b anschließt. Zur Unterscheidung der einzelnen Elemente der Baueinheit 3a, 3b sind diese abweichend schraffiert. Auf einer konisch verlaufenden Reibfläche 8a, 8b des Reibrings 7a, 7b ist jeweils ein Synchronring 9a, 9b geführt, dessen einseitig abgewinkelter Abschnitt außen eine Dachverzahnung aufweist, die mit einer axial verschiebbaren Schiebemuffe 10 zusammenwirkt. Die als Ringkörper gestaltete Schiebemuffe 10 umschließt den Muffenträger 4 und ist mit diesem durch eine Verzahnung verbunden. Das Verzahnungsprofil der Schiebemuffe 10 stimmt weiterhin überein mit den Dachverzahnungen der Synchronringe 9a, 9b sowie der Kupplungskörper 6a, 6b. Ein axiales Verschieben der Schiebemuffe 10 in Richtung einer Synchroneinheit 3a, 3b bis zu einer radialen Überdeckung eines Kupplungskörpers 6a, 6b, bei der dieser mit der Schiebemuffe 10 durch die Verzahnung formschlüssig verbunden ist, ermöglicht einen Kraftfluß von der Getriebewelle 2 auf ein Schaltrad 5a, 5b, welches jeweils mit einem weiteren in Figur 1 nicht abgebildeten Zahnrad in Eingriff steht. Zur Verlagerung der Schiebemuffe 10 dient ein Schaltfinger 12, der in eine Ausnehmung 13 der Schiebemuffe 10 formschlüssig eingreift. Der Schaltfinger 12 ist an einer koaxial zur Getriebewelle 2 angeordneten Schaltwelle 11 lagefixiert, die beispielsweise über einen manuell zu betätigenden Schalthebel in eine der durch die Pfeile angegebenen Axialrichtungen verschiebbar ist.

Die einteilige Baueinheit 3a, 3b gemäß Figur 3 erfordert einen erhöhten, kostenaufwendigen Fertigungsaufwand, insbesondere für die Härtung der Verzahnung 14 des Schaltrades 5b und einer Dachverzahnung 15 des Kupplungskörpers 6b. Ebenso ist zum Schleifen der Reibfläche 8b bei einer einteilig gestalteten Baueinheit 3b aufgrund einer aufwendigeren Aufspannung, ein erhöhter Aufwand erforderl ich.

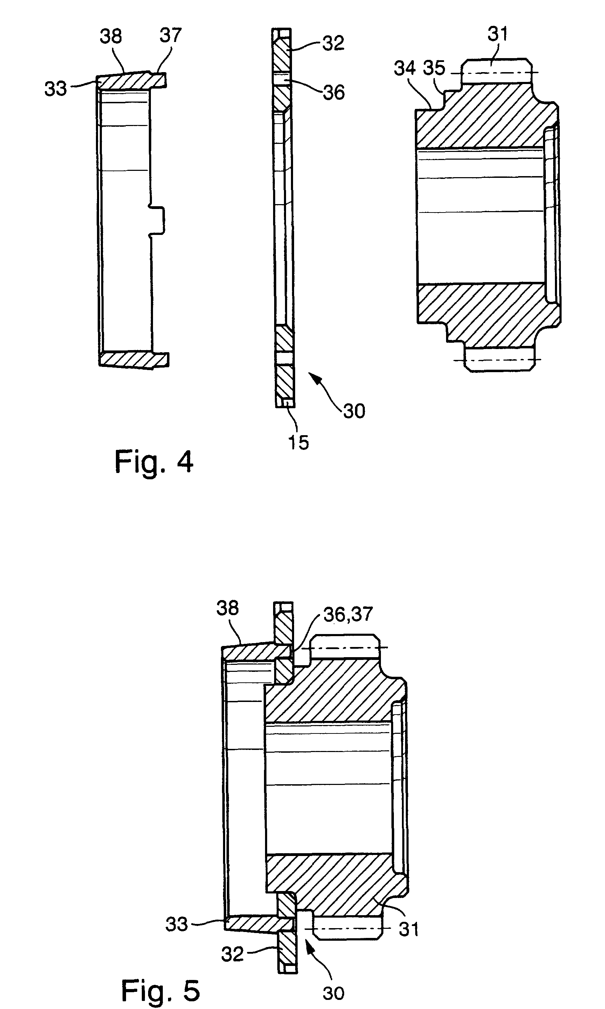

Aus den Figuren 4 und 5 ist der Aufbau der Baueinheit 30 zu entnehmen, die ebenfalls drei Einzelteile umfaßt, das Schaltrad 31, den Kupplungskörper 32 sowie den Reibring 33. Abweichend zur Baueinheit 20 (siehe Figur 1 und 2) ist der Reibring 33 im Kupplungskörper 32 formschlüssig lagefixiert gehalten. Dazu ist der Reibring 33 mit stirnseitig axial verlaufenden Zapfen 37 versehen, die in radial zum Innendurchmesser des Kupplungskörpers 32 versetzt angeordneten Aussparungen 36 formschlüssig eingreifen. Zur Bildung einer unlösbaren Verbindung zwischen dem mit einer Reibfläche 38 versehenen Reibring 33 und dem Kupplungskörper 32 sind beispielsweise die Zapfen 37 an der Aussparung 36 verstemmt. Alternativ oder zusätzlich kann eine Verschweißung dieser Bauteile vorgesehen werden. Der Kupplungskörper 32 ist auf dem Ansatz 34 des Schaltrades 33 lagefixiert und erfährt an der Schulter 35 eine Axialbegrenzung. In Figur 5 ist die aus den Einzelteilen komplettierte Synchronisiereinheit 30 abgebildet.

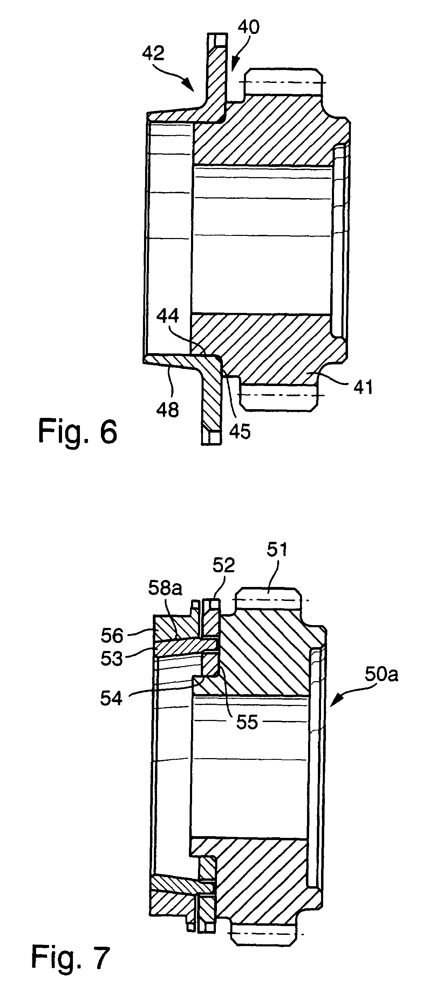

Eine weitere erfindungsgemäße Variante einer Baueinheit zeigt die Figur 6. Die Baueinheit 40 umfaßt zwei Bauteile, das Schaltrad 41 sowie ein Übertragungselement 42, das sowohl die Funktion des Kupplungskörpers als auch die des Reibrings übernimmt. Das im Längsschnitt ein L-förmiges Profil und eine konische Reibfläche 48 aufweisende Übertragungselement 42 ist dabei auf dem Ansatz 44 des Schaltrades 41 zentriert und erfährt an der Schulter 45 eine Axialbegrenzung.

Die Figur 7 zeigt die Baueinheit 50a, die zusammengesetzt ist aus dem Schaltrad 51, dem Kupplungskörper 52 und dem Reibring 53. Entsprechend der Figur 1 ist dabei der Kupplungskörper 52 auf dem Ansatz 54 zentriert und an der Schulter 55 des Schaltrades 51 abgestützt. Zur Darstellung einer Einfachsynchronisation ist auf der Reibfläche 58a des Reibrings 53 ein Synchronring 56 geführt.

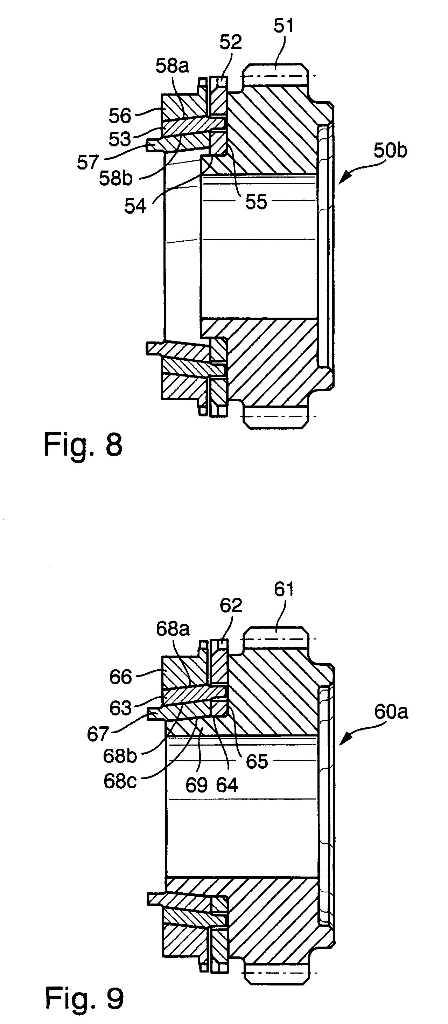

Die Figur 8 zeigt die Baueinheit 50b, die vom Aufbau der in Figur 7 dargestellten Baueinheit 50a entspricht. Zur Darstellung einer Zweifach-Synchronisation sind am Reibring 53 beiderseits Synchronringe geführt. Der Synchronring 56 umschließt den Reibring 53 und steht mit diesem über die Reibfläche 58a in Verbindung. Innenseitig stützt sich an der Reibfläche 58b der Synchronring 57 ab.

Eine Dreifach-Synchronisation in Verbindung der Baueinheit 60a zeigt die Figur 9. Der Kupplungskörper 62 ist auf dem Ansatz 64 des Schaltrades 61 zentriert und an der Schulter 65 abgestützt. Der Reibring 63 ist über Zapfen im Kupplungskörper 62 formschlüssig gehalten. Das Schaltrad 61 ist einstückig mit einem axial vorstehenden Innenkonus 69 versehen, der radial beabstandet zum Reibring 63 angeordnet ist. In einen vom Reibring 63 und dem Innenkonus 69 radial begrenzten Einbauraum ist der erste Synchronring 67 eingesetzt, der über die Reibflächen 68b und 68c am Reibring 63 bzw. am Innenkonus 69 geführt ist. Außenseitig des Reibrings 63 an der Reibfläche 68a ist der zweite Synchronring 66 geführt.

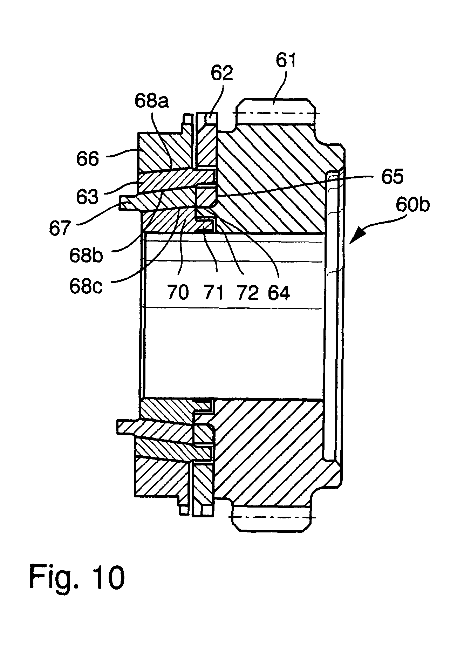

Die in Figur 10 abgebildete Baueinheit 60b unterscheidet sich zu der Baueinheit 60a in Figur 9 durch einen abweichend ausgebildeten Innenkonus 70. Dieser ist über axial vorstehende, partiell umfangsverteilt angeordnete Zapfen 71 in Ausnehmungen 72 des Schaltrades 61 formschlüssig gehalten.

### Bezugszeichen

- 1: Synchronisiervorrichtung
- 2: Getriebewelle
- 3a: Baueinheit
- 3b: Baueinheit
- 4: Muffenträger
- 5a: Schaltrad
- 5b: Schaltrad
- 6a: Kupplungskörper
- 6b: Kupplungskörper
- 7a: Reibring
- 7b: Reibring
- 8a: Reibfläche
- 8b: Reibfläche
- 9a: Sychronring
- 9b: Synchronring
- 10: Schiebemuffe
- 11: Schaltwelle
- 12: Schaltfinger
- 13: Ausnehmung
- 14: Verzahnung
- 15: Dachverzahnung
- 20: Baueinheit
- 21: Schaltrad
- 22: Kupplungskörper
- 23: Reibring
- 24: Ansatz
- 25: Schulter
- 26: Aussparung
- 27: Zapfen
- 28: Reibfläche
- 29: Verdrehsicherung
- 30: Baueinheit
- 31: Schaltrad
- 32: Kupplungskörper
- 33: Reibring
- 34: Ansatz
- 35: Schulter
- 36: Aussparung
- 37: Zapfen
- 38: Reibfläche
- 40: Baueinheit
- 41: Schaltrad
- 42: Übertragungselement
- 44: Ansatz
- 45: Schulter
- 48: Reibfläche
- 50a: Baueinheit
- 50b: Baueinheit
- 51: Schaltrad
- 52: Kupplungskörper
- 53: Reibring
- 54: Ansatz
- 55: Schulter
- 56: Synchronring
- 57: Synchronring
- 58a: Reibfläche
- 58b: Reibfläche
- 60a: Baueinheit
- 60b: Baueinheit
- 61: Schaltrad
- 62: Kupplungskörper
- 63: Reibring
- 64: Ansatz
- 65: Schulter
- 66: Synchronring
- 67: Synchronring
- 68a: Reibfläche
- 68b: Reibfläche
- 68c: Reibfläche
- 69: Innenkonus
- 70: Innenkonus
- 71: Zapfen
- 72: Ausnehmung

## Patentansprüche

1. Synchronisiervorrichtung für ein in Kraftfahrzeugen eingesetztes Zahnräderwechselgetriebe, umfassend ein Schaltrad (21), einen Kupplungskörper (22) sowie einen Reibring (23), wobei der Kupplungskörper (22) während eines Schaltvorgangs über eine Dachverzahnung formschlüssig mit einer Schiebemuffe verbunden ist und eine konische Reibfläche (28) des Reibrings (23) während einer Synchronisierung mit einem Synchronring zusammenwirkt, **dadurch gekennzeichnet, dass** das Schaltrad (21) der Kupplungskörper (22) und der Reibring (23) als vorfertigbare Einzelteile gestaltet sind, die zur Schaffung einer Baueinheit (20) drehfixiert, unlösbar miteinander verbunden sind, wobei der Reibring (23) über axial vorstehende Zapfen (27) an einem zylindrischen Ansatz (24) des Schaltrades (21) zentriert ist und die Zapfen (27) gleichzeitig in Aussparungen (26) des Kupplungskörpers (22) eingepasst sind.

2. Synchronisiervorrichtung nach Anspruch 1, mit einem als Gußteil gestalteten Schaltrad (21), einem als Feinstanzteil ausgelegten Kupplungskörper (22) sowie einem als ein Tiefziehteil gestalteten Reibring (23).

3. Synchronisiervorrichtung nach Anspruch 1, wobei die Einzelteile der Baueinheit (20) aus unterschiedlichen Materialien hergestellt sind, das Schaltrad (21) aus Feinguß GS 45, der Kupplungskörper (22) aus C 15; CK 15 und der Reibring (23) aus 100 Cr 6; 16 Mn Cr 5 oder C 80 M.

4. Synchronisiervorrichtung nach Anspruch 1, wobei das Schaltrad (21) neben dem vorstehenden Ansatz (24) eine sich daran radial erstreckende Schulter (25) aufweist, die gemeinsam eine Zentrierung bzw. einen Axialanschlag für den Kupplungskörper (22) bilden.

5. Synchronisiervorrichtung nach Anspruch 1, wobei die axial vorstehenden Zapfen (27) des konischen Reibrings (23) an der den größten Durchmesser aufweisenden Stirnseite vorgesehen sind, die formschlüssig in entsprechende Aussparungen (26) des Kupplungskörpers (22) eingreifen.

6. Synchronisiervorrichtung für ein in Kraftfahrzeugen eingesetztes Zahnräderwechselgetriebe, umfassend ein Schaltrad (51,61), einen Kupplungskörper (52,62) sowie einen Reibring (53,63), wobei der Kupplungskörper (52,62) während eines Schaltvorgangs über eine Dachverzahnung formschlüssig mit einer Schiebemuffe verbunden ist und konische Reibflächen (58a,58b; 68a,68b) des Reibrings (53,63) jeweils einen Synchronring (56,57; 66,67) zugeordnet sind, **dadurch gekennzeichnet, dass** die Bauteile, das Schaltrad (51,61), der Kupplungskörper (53,63) sowie der Reibring (53,63) als vorfertigbare Einzelteile gestaltet sind, die zur Schaffung einer Baueinheit (50b,60a) drehfixiert, unlösbar miteinander verbunden sind und denen ein Synchronring (56, 57; 66, 67) als ein Losteil zugeordnet ist.

7. Synchronisiervorrichtung nach Anspruch 6, wobei das Schaltrad (61) einstückig mit einem axial vorspringenden Konus (69) versehen ist, dessen axiale Länge übereinstimmt mit der des Reibrings (63) und zur Bildung einer Dreifach-Synchronisation zwischen dem Konus (69) und dem Reibring (63) ein Synchronring (67) geführt ist und auf den Reibring (63) außenseitig von einem weiteren Synchronring (66) umschlossen ist.

8. Synchronisiervorrichtung nach Anspruch 6, wobei dem Schaltrad (61) als ein separates Bauteil ein zur Führung des Synchronrings (67) dienender Innenkonus (70) zugeordnet ist, welches mit partiell angeordneten, axial vorstehenden Zapfen (71) formschlüssig in Ausnehmungen (72) des Schaltrades (61) eingreift.

## Claims

1. Synchronizing device for variable-speed transmission used in motor vehicles, comprising a shift wheel (21), a clutch body (22) and a friction ring (23), the clutch body (22) being connected positively to a sliding sleeve via a roof-type denticulation during a shifting operation, and a conical friction surface (28) of the friction ring (23) cooperating with a synchronizing ring during synchronization, **characterized in that** the shift wheel (21), the clutch body (22) and the friction ring (23) are configured as prefabricatable individual parts which, fixed into rotation, are connected unreleasably to one another in order to produce a structural unit (20), the friction ring (23) being centred on a cylindrical extension (24) of a shift wheel (21) via axially projecting tenons (27), and the tenons (27) at the same time being fitted into clearances (26) of the clutch body (22).

2. Synchronizing device according to Claim 1, with a shift wheel (21) configured as a casting, with a clutch body (22) designed as a precision stamping and with a friction ring (23) configured as a deep-drawn part.

3. Synchronizing device according to Claim 1, individual parts of the structural unit (20) being produced from different materials, the shift wheel (21) from investment-cast metal GS 45, the clutch body (22) from C 15; CK 15 and the friction ring (23) from 100 Cr 6; 16 Mn Cr 5 or C 80 M.

4. Synchronizing device according to Claim 1, the shift wheel (21) having, in addition to the projecting extension (24), a shoulder (25) extending radially thereon, the said extension and the said shoulder together forming a centring or an axial stop for the clutch body (22).

5. Synchronizing device according to Claim 1, the axially projecting tenons (27) of the conical friction ring (23) being provided on the end face having the largest diameter, the said tenons engaging into corresponding clearances (26) of the clutch body (22).

6. Synchronizing device for a variable-speed transmission used in motor vehicles, comprising a shift wheel (51, 61), a clutch body (52, 62) and a friction ring (53, 63), the clutch body (52, 62) being connected positively to a sliding sleeve via a roof-type denticulation during a shifting operation, with conical friction surfaces (58a, 58b; 68a, 68b) of the friction ring (53, 63) being assigned in each case a synchronizing ring (56, 57, 66, 67), **characterized in that** the components, shift wheel (51, 61), clutch body (53, 63) and friction ring (53, 63), are configured as prefabricatable individual parts which, fixed in terms of rotation, are connected unreleasably to one another in order to produce a structural unit (50b, 60a) and to which a synchronizing ring (56, 57; 66, 67) is assigned as a loose part.

7. Synchronizing device according to Claim 6, the shift wheel (61) being provided in one piece with an axially projecting cone (69), the axial length of which is identical to that of the friction ring (63), and, to provide triple synchronization, a synchronizing ring (67) is led between the cone (69) and the friction ring (63) and is surrounded on the outside of the friction ring (63) by a further synchronizing ring (66).

8. Synchronizing device according to Claim 6, the shift wheel (61) being assigned, as a separate component, an inner cone (70) which serves for guiding the synchronizing ring (67) and which engages positively, with partially arranged axially projecting tenons (71), into recesses (72) of the shift wheel (61).

## Revendications

1. Synchroniseur pour une boîte de changement de vitesses à engrenages mise en oeuvre dans des véhicules automobiles, comprenant un pignon de vitesse (21), un corps de couplage (22) ainsi qu'une bague de friction (23), le corps de couplage (22) étant raccordé, pendant un passage de vitesse, à un manchon coulissant par une liaison par la forme via une denture en V et une surface de friction conique (28) de la bague de friction (23) coopérant avec une bague de synchronisation pendant une synchronisation, **caractérisé en ce que** le pignon de vitesse (21), le corps de couplage (22) et la bague de friction (23) sont réalisés sous forme de pièces détachées pouvant être préfabriquées qui sont assemblées les unes aux autres de manière indémontable, solidaire en rotation afin de constituer un module (20), dans lequel la bague de friction (23) est centrée sur un embout cylindrique (24) du pignon de vitesse via des tenons (27) débordant axialement et les tenons (27) sont en même temps emboîtés dans des évidements (26) du corps de couplage (22).

2. Synchroniseur selon la revendication 1 avec un pignon de vitesse (21) réalisé sous forme d'une pièce coulée, avec un corps de couplage (22) conçu en tant que pièce découpée avec précision ainsi qu'avec une bague de friction (23) réalisée en tant que pièce emboutie.

3. Synchroniseur selon la revendication 1, où les pièces détachées de l'unité modulaire (20) sont fabriquées en différents matériaux : le pignon de vitesse (21) en fonte fine GS 45, le corps de couplage (22) en C 15, CK 15 et la bague de friction (23) en 100 Cr 6, 16 Mn Cr 5 ou C 80 M.

4. Synchroniseur selon la revendication 1, où le pignon (21) présente, outre l'embout saillant (24), un épaulement (25) s'étendant radialement par rapport à celle-ci, formant ensemble respectivement un centrage et une butée axiale pour le corps de couplage (22).

5. Synchroniseur selon la revendication 1, où les tenons (27) de la bague de friction (23) conique débordant axialement sont présents sur la face ayant le plus grand diamètre, lesquels tenons s'engagent par liaison par la forme dans des évidements correspondants (26) du corps de couplage (22).

6. Synchroniseur pour une boîte de changement de vitesses à engrenages mise en oeuvre dans des véhicules automobiles, comprenant un pignon de vitesse (51,61), un corps de couplage (52,62), ainsi qu'une bague de friction (53,63), le corps de couplage (52,62) étant raccordé, pendant un passage de vitesse, à un manchon coulissant par une liaison par la forme via une denture en V et des surfaces de friction coniques (58a, 58b ; 68a, 68b) de la bague de friction (53,63) étant chacune associées à une bague de synchronisation (56, 57 ; 66, 67), **caractérisé en ce que** les composants, le pignon de vitesse (51,61), le corps de couplage (53,63) ainsi que la bague de friction (53,63) sont réalisés sous forme de pièces détachées pouvant être préfabriquées, lesquelles sont assemblées les unes aux autres de manière indémontable, solidaire en rotation afin de constituer un module (50b, 60a) et auxquelles une bague de synchronisation (56, 57 ; 66, 67) est associée en tant que pièce démontable.

7. Synchroniseur selon la revendication 6, où le pignon de vitesse (61) forme une seule pièce munie d'un cône (69) faisant saillie axialement et dont la longueur axiale correspond à celle de la bague de friction (63) et une bague de synchronisation (67) est guidée entre le cône (69) et la bague de friction (63) afin de réaliser une triple synchronisation et est entourée, sur l'extérieur de la bague de friction (63), par une autre bague de synchronisation (66).

8. Synchroniseur selon la revendication 6, où un cône intérieur (70) servant au guidage de la bague de synchronisation (67) est associé, en tant que composant séparé, au pignon de vitesse (61), lequel cône s'engage par liaison par la forme dans des évidements (72) du pignon de vitesse (61) grâce à des tenons (71) débordant axialement et partiellement présents.
